# EUROPEAN PATENT APPLICATION

(11) **EP 4 572 403 A1**
(43) Date of publication of application: **18.06.2025**
(21) Application number: 23851430.1
(22) Date of filing: 28.06.2023
(51) Int. Cl.: H04W 36/08

(54) **CELL RESELECTION METHOD AND APPARATUS, AND DEVICE**

(30) Priority: 10.08.2022 CN 202210954741
(71) Applicant: Datang Mobile Communications Equipment Co., Ltd., Beijing 100085 (CN)
(72) Inventor: ZHANG, Xiangdong, Beijing 100085 (CN); SUN, Jiancheng, Beijing 100085 (CN); MIAO, Jinhua, Beijing 100085 (CN); JIA, Yinan, Beijing 100085 (CN); XU, Meng, Beijing 100085 (CN)
(74) Representative: Cabinet Nony
(86) International application number: PCT/CN2023/103516
(87) International publication number: WO 2024/032203

(57) **Abstract**

The present disclosure relates to a method for cell reselection, apparatus and device. The method comprises: receiving list information, wherein the list information comprises information of one or more neighboring cells; selecting candidate cells according to the list information. The present disclosure introduces a list of listed cells for process of cell reselection in NTN network. Compared with related technologies, it has lower system overhead, enables cells reselected by the UE clearer, shortens the reselection time and reduces power consumption.

## Description

### CROSS-REFERENCE TO RELATED APPLICATIONS

The present disclosure claims priority to Chinese patent application No. 202210954741.8 filed on August 10, 2022 to China National Intellectual Property Administration , and entitled "METHOD FOR CELL RESELECTION, APPARATUS, AND DEVICE", the entire content of which is incorporated herein by reference.

### TECHNICAL FIELD

The present disclosure relates to wireless communication technical filed, specifically relates to a method for cell reselection, apparatus and device.

### BACKGROUND

In the current system, a process of cell reselection of User Equipment (UE) generally includes: identifying cells or receiving a list of neighboring cells; measuring above-mentioned cells; reading system messages of cells that meet the cell reselection criteria; determining that the cell is a suitable cell according to the system messages of the cell, which means that the process of cell reselection is successful and ends.

In satellite communication systems, since cells of non-terrestrial networks (NTN) are very large, in order to make the reselection of terrestrial network (TN) cells by UE in the cell more targeted and reduce unnecessary neighboring cell reselection judgments in the current related technologies, location information (geographic tags) may be bound to cell reselection information. The network side broadcasts the neighboring cells to the UE through system messages and broadcasts the location information at the same time. The location information may be the reference location on the ground. The UE determines the location information (geographic tag) closest to its own location and selects the cell reselection information corresponding to the location information.

Although the above mechanism may reduce the necessary neighboring cell reselection judgments, the amount of location information is too large, resulting in an increase in system overhead.

### SUMMARY

The present disclosure provides a method, apparatus and device for cell reselection, aiming to solve the problems in the related technologies that broadcasting system message may not satisfy requirements due to the large size of NTN cells and that broadcasting location information increases the system overhead.

In a first aspect, embodiments of the present disclosure provides a method for cell reselection, which is applied to the UE. The method includes: receiving list information, wherein the list information includes information of one or more neighboring cells; and selecting candidate cells according to the list information.

As an optional implementation, the list information includes blacklist information and/or whitelist information.

As an optional implementation, the list information also includes location information, and the location information is used to indicate the locations of the neighboring cells included in the list information.

As an optional implementation, the location information is azimuth indication information, and the azimuth indication information is used to indicate azimuths of the neighboring cells included in the list information with reference to a serving cell.

As an optional implementation, receiving the list information includes: receiving a first message transmitted from the network side, wherein the first message includes the list information.

As an optional implementation, the first message is a broadcast message or a Radio Resource Control connection release message.

As an optional implementation, the first message also carries valid indication information, and the valid indication information is used to indicate validity of the list information.

As an optional implementation, the valid indication information is a distance threshold, and the method also includes: obtaining the moving distance of the UE; in the case that the moving distance of the UE exceeds the distance threshold, determining that the list information is invalid.

In a second aspect, embodiments of the present disclosure provides a method for cell reselection, which is applied to network-side devices. The method includes: determining list information, wherein the list information includes information of one or more neighboring cells; transmitting the list information to the UE for enabling the UE to select candidate cells according to the list information.

As an optional implementation, the list information includes blacklist and/or whitelist information.

As an optional implementation, the list information also includes location information, and the location information is used to indicate the locations of the neighboring cells included in the list information.

As an optional implementation, the location information is azimuth indication information, and the azimuth indication information is used to indicate the azimuths of the neighboring cells included in the list information with reference to a serving cell.

As an optional implementation, transmitting the list information to the UE includes: transmitting the list information to the UE through a first message.

As an optional implementation, the first message is a broadcast message or a Radio Resource Control connection release message.

As an optional implementation, the first message also carries valid indication information, and the valid indication information is used to indicate validity of the list information.

As an optional implementation, the valid indication information is a distance threshold.

In a third aspect, embodiments of the present disclosure provides an apparatus for cell reselection. The apparatus includes: a list receiving module, which is used to receive list information, the list information includes information of one or more neighboring cells; a cell reselection module, which is used to select candidate cells according to the list information.

In a fourth aspect, embodiments of the present disclosure provides an apparatus for cell reselection. The apparatus includes: a list determining module, which is used to determine list information, the list information includes information of one or more neighboring cells; a list transmitting module, which is used to transmit the list information to the UE for enabling the UE to select candidate cells according to the list information.

In a fifth aspect, embodiments of the present disclosure provides a UE, which includes at least one processor and a memory communicatively connected to the at least one processor. The memory stores instructions that may be executed by the at least one processor, and when the instructions are executed by the at least one processor, it may enable the at least one processor to execute the method provided in the first aspect mentioned above.

In a sixth aspect, embodiments of the present disclosure provides a network-side device, which includes at least one processor and a memory communicatively connected to the at least one processor. The memory stores instructions that can be executed by the at least one processor, and when the instructions are executed by the at least one processor, it may enable the at least one processor to execute the method provided in the second aspect mentioned above.

In a seventh aspect, embodiments of the present disclosure provides a computer program medium on which a computer program is stored. When the program is executed by a processor, it may implement the steps of the method provided in the first aspect mentioned above or the steps of the method provided in the second aspect mentioned above.

The method, apparatus and device for cell reselection provided in the embodiments of the present disclosure may have the following beneficial effects: Introducing the cell list into the cell reselection process in the NTN network. Compared with the related technologies, it may have lower system overhead, make the cells reselected by the UE more definite, shorten the time of reselection and reduce power consumption.

### BRIEF DESCRIPTION OF DRAWINGS

In order to explain technical schemes in embodiments of the present disclosure more clearly, the following will briefly introduce accompanying drawings that need to be used in the description of the embodiments. Apparently, the accompanying drawings in the following description are only some embodiments of the present disclosure, and for those of ordinary skill in the art, on the premise of no creative labor, other accompanying drawings may further be obtained from these accompanying drawings.
FIG. 1 is a schematic diagram of the NTN network architecture according to the embodiments of the present disclosure;
FIG. 2 is a schematic diagram of the cell coverage range of the NTN network illustrated according to the embodiments of the present disclosure;
FIG. 3 is a schematic flowchart of a method for cell reselection applied to a UE provided according to the embodiments of the present disclosure;
FIG. 4 is a schematic flowchart of a method for cell reselection applied to network-side device according to the embodiments of the present disclosure;
FIG. 5 is a schematic diagram of dividing NTN network cells in different directions provided according to the embodiments of the present disclosure;
FIG. 6 is a schematic diagram of another way of dividing NTN network cells in different directions provided according to the embodiments of the present disclosure;
FIG. 7 is a schematic diagram of dividing NTN network cells in different directions according to angles provided according to the embodiments of the present disclosure;
FIG. 8 is a schematic diagram of determining cells in the opposite direction for transmitting list information according to motion trajectory provided according to the embodiments of the present disclosure;
FIG. 9 is a schematic structural diagram of an apparatus for cell reselection provided according to the embodiments of the present disclosure;
FIG. 10 is a schematic structural diagram of another apparatus for cell reselection provided according to the embodiments of the present disclosure;
FIG. 11 is a schematic structural diagram of user equipment (UE) provided according to the embodiments of the present disclosure;
FIG. 12 is a schematic structural diagram of network-side device provided according to the embodiments of the present disclosure.

### DETAILED DESCRIPTION

In order to make the objects, technical schemes and advantages of the present disclosure clearer, the present disclosure will be further described in detail in combination with accompanying drawings below. Apparently, described embodiments are only part of the embodiments of the present disclosure, not all of them. Based on the embodiments in the present disclosure, all other embodiments obtained by those of ordinary skill in the art without making creative work belong to the protection scope of the present disclosure.

In satellite communication, there are two working modes:
1) Transparent forwarding mode. Satellites only transparently forward signals without any processing. Terminals communicate with gateway stations. That is to say, satellites only perform operations such as frequency conversion and radio signal amplification on uplink/downlink signals, and the functions of the satellites are similar to those of radio frequency relays.
2) Regenerative communication mode. At this mode, satellites may detect information of received signals, process and forward the received signals, thereby fulfilling the functions of base stations and connecting terminals and gateway stations. That is to say, satellites may perform functions such as frequency conversion, radio signal amplification, encoding/modulation, demodulation/decoding on uplink/downlink signals. In other words, satellites may have all or part of the functions of 5G base stations (gNB) and may regenerate signals.

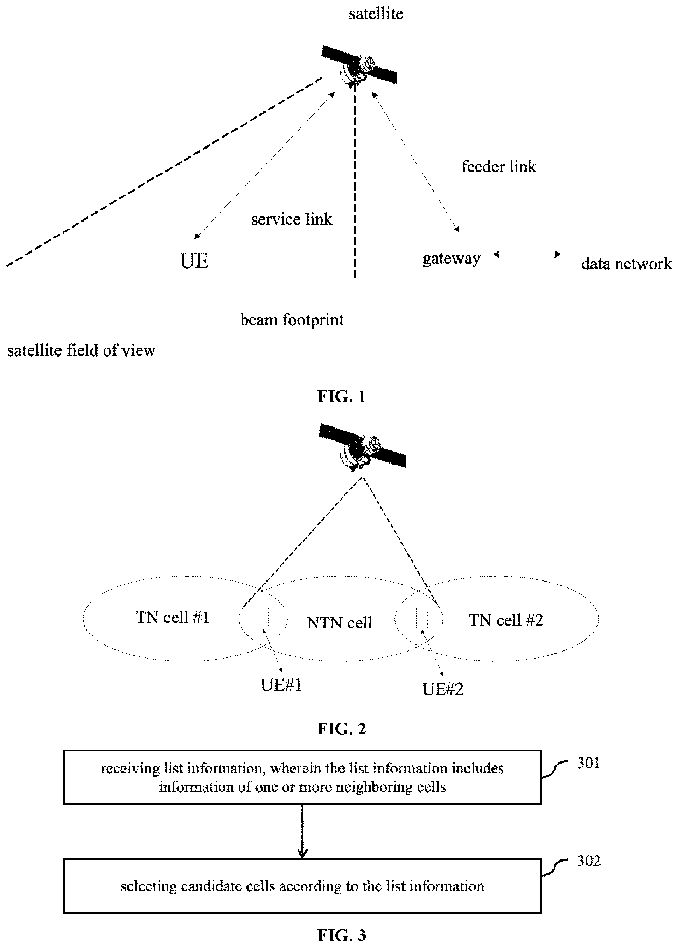

In satellite communication, connection between terminal user and satellite may be called as an service link. The connection between the satellite and the gateway station is a feeder link. FIG. 1 is a schematic diagram of the transparent forwarding mode.

In the related technologies, relevant proposals put forward a scheme of cell reselection information based on location. The main problem to be solved is: for process of cell reselection of NTN-TN, there are significant difference among neighboring cells of NTN cells since the NTN cells are very large. For example, in the FIG. 2, TN cell #2 is not a neighboring cell for UE #1. Similarly, TN cell #1 is not a neighboring cell for UE #2. In order to make the UE that performs the cell reselection more targeted for the reselection of TN cells and reduce unnecessary neighboring cell reselection judgement, location information (geographic tags) may be bound to cell reselection information, that is to say, when broadcasting the cell list, the location information of cells may be broadcast. The location information may be a reference location on the ground. The UE may determine the location information (geographic tag) closest to its own location, and may select the cell reselection information corresponding to the location information. For example, in the case that TN cell #2 has location information, UE #1 may not consider TN cell #2 as its neighboring cell, and may not execute a neighboring cell judgement for TN cell #2 (for example, reading system message and then judging whether the cell may be camped on), even if the quality of the cell is relatively good.

However, in the above scheme, due to large amount of location information, the system overhead is too large.

In view of the technical problems of the related technologies described above, the embodiments of the present disclosure provide a method for cell reselection. As shown in FIG. 3, the method includes:
301. receiving list information, wherein the list information includes information of one or more neighboring cells;
302. selecting candidate cells according to the list information.

In the current communication system, before a UE select a certain cell to camp on, it may read system messages of the certain cell and further judge PLMN information (for example, whether the PLMN on which the certain cell is located belongs to registered PLMN of the UE) and cell forbidden information (for example, cell Reserved For Operator Use, cell Reserved For Other Use and cell Reserved For Future Use are set as "true", or the certain cell belongs to "Forbidden Tracking Areas" provided by NAS). In order to avoid the situation that after the UE reads the system messages of the cell and then finds that the cell is not suitable for camping on or accessing, thereby reducing time of cell selection or reselection of the UE and power consumption of the UE, the present disclosure introduces the list information, which includes information of one or more neighboring cells. By introducing the listing information, the UE does not need to read the system messages and then make judgement. Introducing the list of cells into the cell reselection process in the NTN network may, compared with the related technologies, make system overhead smaller, make the cells reselected by the UE more definite, make the time of reselection more short, and make the power consumption more lower.

In one possible implementation, the list information may include blacklist information and/or whitelist information.

The blacklist information may include black cell list, the whitelist information may include white cell list. The black cell list clearly informs the UE that the UE cannot access the cells. After identifying the cells, the UE does not need to read the system messages and then make judgement. The white cell list clearly informs the UE that the UE only needs to consider the cells and does not need to consider other cells. Then, if the UE identifies a cell that does not belong to the white cell list, it may not attempt to read its system messages.

In a possible implementation, the list information may further include location information, wherein the location information is used to indicate locations of the neighboring cells included in the list information.

As mentioned before, since the cells in the NTN network is very large, a certain cell may be a neighboring cell for one UE, but not necessarily for another UE. In the embodiments of the present disclosure, the list information includes the location information. The location information is used to indicate the locations of the neighboring cells included in the list information. In the embodiments of the present disclosure, the list information broadcast by the network side may be list information corresponding to the location information. That is, different location information correspond to different list information, and the same list information corresponds to the same location information. Then the UE may select a neighboring cell in the list information corresponding to its own location information for cell reselection. Alternatively, in the embodiments of the present disclosure, the neighboring cells in the list information broadcast by the network side may be neighboring cells corresponding to the location information. That is, different location information correspond to neighboring cells in different list information. The neighboring cells in the same list information corresponds to the same location information. Then the UE may select the neighboring cell in the list information corresponding to its own location information for cell reselection.

In a possible implementation, the location information is azimuth indication information, the azimuth indication information is used to indicate azimuths of the neighboring cells included in the list information with a serving cell as reference. The serving cell includes one or more azimuths. The above-mentioned azimuths may be understood as different location areas of the serving cell. A cell may be divided to multiple azimuths. The division method may be to divide the cell by angles with the center of the cell as the center point, or by using spaced horizontal lines in a certain direction.

In a possible implementation, performing cell reselection based on the information of the neighboring cell in the blacklist information and/or whitelist information includes:
When only white cell list is included, selecting preferentially neighboring cells for reselection from the white cell list. In the case that the neighboring cells in the white cell list is not successfully reselected, selecting other neighboring cells except those in the white cell list among all neighboring cells in the location area on which the UE is located.

When only black cell list is included, selecting neighboring cells except those in the black cell list among all neighboring cells in the location area on which the UE is located.

When both the white cell list and the black cell list are included, selecting preferentially neighboring cells for reselection from the white cell list. In the case that the neighboring cells in the white cell list is not successfully reselected, selecting other neighboring cells except those in the white cell list and the black cell list among all neighboring cells in the location area on which the UE is located.

In a possible implementation, receiving the list information includes: receiving a first message transmitted from the network side, wherein the first message includes the list information.

The first message above-mentioned is a broadcast message or a Radio Resource Control connection release message transmitted from the network side.

In the Non-Terrestrial Network (NTN), the moving trajectory of satellite is predictable. During the cell reselection process caused by satellite movement, the cells that the UE may reselect are also predictable and definite. For UE with connected state, one way is that the base station may directly enable the UE handover to a specified cell based on the location information of the UE and the network coverage determined by ephemeris information and cell information.

For an UE with idle state, the same way may also be applied. That is, there is no necessary to enable the UE to obtain cell information through blind testing and then evaluate and determine a selected cell. Different from the UE with connected state, for the UE with idle state, the network may not obtain the location information of each UE, nor may it indicate the UE to reselect to a specified cell through dedicated signaling. Therefore, some designs may be needed for the UE with idle state.

The above way also applies to the reselection process between the NTN and the TN network. For example, after an NTN cell moves out of the coverage area, the TN cells covering the coverage area are also predictable and definite. Vice versa, that is, when reselecting from a TN cell to an NTN cell, the NTN cells covering the TN cell are also predictable and definite.

In the embodiments of the present disclosure, when the UE releases the Radio Resource Control (RRC) connection, the network side determines the location at which the UE releases the RRC connection as the location of the UE. Since the network side has predetermined the blacklist information and/or the whitelist information for different azimuths in advance, it may determine the azimuth at which the UE is located according to the location at which the UE releases the RRC connection and indicate the blacklist information and/or the whitelist information for the azimuth at which the UE is located to the UE. In this situation, there is no necessary to carry location information. Of course, it is also possible to indicate the blacklist information and/or the whitelist information for all azimuths and carry the location information. Then, the UE may determine the azimuth at which it is located according to its own location, select and use the blacklist information and/or the whitelist information for the azimuth at which it is located based on the location information.

In the embodiments of the present disclosure, the blacklist information and/or the whitelist information corresponding to the azimuth at which the UE is located among different azimuths of current serving cell of the UE determined by the network side are received through the RRC Release message; or
The area identifiers of different azimuths of the current serving cell of the UE determined by the network side and the corresponding blacklist information and/or whitelist information are received through the RRC Release message; or

The area identifiers of different azimuths of the current serving cell of the UE determined by the network side and the corresponding blacklist information and/or whitelist information are received through the system message.

As an optional implementation, since the UE may move in location after releasing the RRC connection, the first message also carries valid indication information. The valid indication information is used to indicate the validity of the list information. In the embodiments of the present disclosure, when the network side only indicates the list information of the azimuth at which the UE is located, the first message above-mentioned also carries the valid indication information.

As an optional implementation, the valid indication information above-mentioned is a distance threshold. The method further includes: obtaining a moving distance of the UE and determining whether the moving distance of the UE exceeds the distance threshold. In the case that the moving distance of the UE exceeds the distance threshold, it may be determined that the list information becomes invalid.

The UE determines whether the moving distance exceeds the distance threshold based on the change of the current location relative to the location when the RRC connection release message was received. In the case that the moving distance does not exceed the distance threshold, according to the blacklist information and/or the whitelist information in the RRC connection release message, target blacklist information and/or target whitelist information corresponding to a location area at which the UE is located are determined.

Otherwise, it is determined that the blacklist information and/or the whitelist information in the RRC connection release message becomes invalid, and according to the blacklist information and/or the whitelist information in the system message, the target blacklist information and/or the target whitelist information corresponding to the location area at which the UE is located are determined.

As an optional implementation, the neighboring cells include TN cells and/or NTN cells. When NTN cells are included, the NTN cells are the cells that cover different azimuths of the serving cell of the UE in the next hop.

The following presents the detailed implementation for the UE to perform cell reselection, which mainly includes the following steps:
1) Receiving blacklist and/or whitelist including azimuth information transmitted from the network side.

The UE may receive the blacklist and/or whitelist above-mentioned including azimuth information through system messages or RRC connection release messages. Moreover, in the case that the UE receives the blacklist and/or whitelist above-mentioned including azimuth information through the RRC connection release message, the UE uses preferentially the blacklist and/or whitelist above-mentioned including azimuth information received in the RRC connection release message. It is assumed that when the network side enable the UE leave the connected state through the RRC connection release message, the network side may know the relatively precise location of the UE. At this time, the network side may indicate more definite and specific candidate neighboring cells of the UE to the UE through the RRC connection release message. In this way, the network side may have candidate neighboring cells as precise as possible, minimize the number of cells that the UE attempts during cell reselection, and reduce the cell reselection delay and the resulting power consumption.

In a possible implementation, in the case that the UE receives the blacklist information and/or the whitelist information including azimuth information from the RRC connection release message, and at the same time, the UE also receives invalidation configuration information of the blacklist information and/or the whitelist information including azimuth information in the RRC connection release message from the network side. The invalidation configuration information may be a distance threshold. When a change of the location of the UE exceeds the distance threshold, the above information received through the RRC connection release message may become invalid. Alternatively, at this time, the UE may use the above information transmitted in the system message. The case that the change of the location of the UE exceeds the distance threshold may be described as follows: the UE records its own location 1 when receiving the RRC connection release message and then continues to determine its new location 2, and the distance between the new location 2 and the location 1 is greater than the distance threshold.

In addition, the advantage of the network side configuring the distance threshold is that it may avoid the power consumption caused by the calculations performed by the UE to determine neighboring cells based on ephemeris information. Based on the ephemeris information, the network side may judge and set an appropriate size of the distance threshold so that the candidate neighboring cells may possibly change when the movement of the UE exceeds the range of the distance threshold at the location of the UE. Otherwise, the UE would need to calculate by itself based on the ephemeris information to determine how much the change of its own location would cause the candidate neighboring cells to change.

2) Based on the received blacklist information/whitelist information including azimuth information and/or the invalidation configuration information received from the RRC connection release message, performing the cell reselection process. The specific process is as follows:
In the case that the UE receives the blacklist information/whitelist information related to its own azimuth information from the RRC connection release message, when performing cell reselection, the UE uses preferentially the blacklist information/whitelist information related to its own azimuth information received from the RRC connection release message.

In the case that the UE does not receive the blacklist information/whitelist information related to its own azimuth information from the RRC connection release message, or in the case that the UE performs cell reselection based on the azimuth information and/or the blacklist information/whitelist information related to the azimuth information received from the RRC connection release message but fails to obtain a cell available for camping on, and when the system message transmits the azimuth information as well as the blacklist information/whitelist information related to the azimuth information, the UE performs cell reselection based on the azimuth information and the blacklist information/whitelist information related to the azimuth information transmitted from the system message.

Performing the cell reselection based on the azimuth information and/or the blacklist/whitelist related to the azimuth information included in the RRC connection release message, or the azimuth information as well as the blacklist/whitelist information related to the azimuth information transmitted through the system message is specifically as follows: The UE determined the azimuth at which it is located according to its own location and the coverage of the current serving cell; Then, based on the determined azimuth, the UE obtains the blacklist information/whitelist information corresponding to the azimuth. Subsequently, during cell reselection, the cells in the blacklist are not considered, or the cells in the whitelist need to be considered (or only the cells in the whitelist need to be considered).

In the case that the UE fails to obtain effective cell for camping on when performing cell reselection based on the azimuth information and/or the blacklist/whitelist related to the azimuth information included in the RRC connection release message, or the azimuth information as well as the blacklist/whitelist information related to the azimuth information transmitted through the system message, the UE may ignore the above configuration and perform the cell reselection process that is not restricted by the information. For example, the UE may simply select a cell according to the signal quality of the cell, read the system message of the cell, and determine whether the cell may be camped according to the information in the system message.

The blacklist information/whitelist information related to the azimuth information refers to the list of cells that need to be excluded (blacklist) / the list of cells that need to be (or only need to be) considered (whitelist) within an azimuth range indicated by the azimuth information.

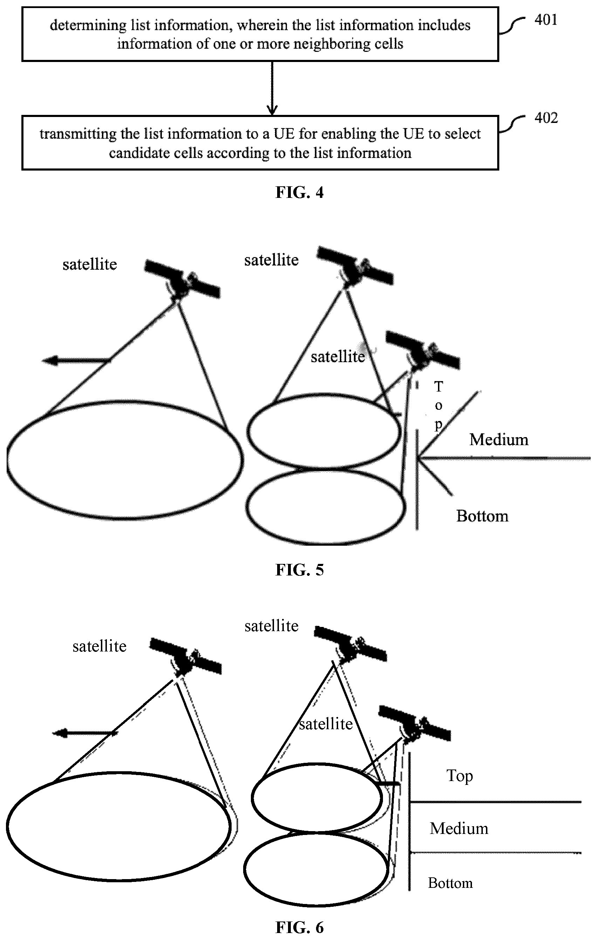

Based on the same inventive concept, the embodiments of the present disclosure also provide a method for cell reselection. As shown in FIG. 4, the method is applied to network-side device and includes the following steps:
Step 401: Determining list information, wherein the list information includes information of one or more neighboring cells.
Step 402: transmitting the list information to the UE to enable the UE to select candidate cells according to the list information.

In a possible implementation, the list information includes blacklist information and/or whitelist information.

In a possible implementation, the list information also includes location information, and the location information is used to indicate the locations of the neighboring cells included in the list information.

In a possible implementation, the location information is azimuth indication information, and the azimuth indication information is used to indicate the azimuths of the neighboring cells included in the list information with reference to a serving cell.

In a possible implementation, transmitting the list information to the UE includes: transmitting the list information to the UE through a first message.

In a possible implementation, the first message is a broadcast message or a Radio Resource Control connection release message.

In a possible implementation, the first message also carries valid indication information, and the valid indication information is used to indicate the validity of the list information.

In a possible implementation, the valid indication information is a distance threshold.

In a possible implementation, the distance threshold is determined in the following way: based on the location information corresponding to the moment when the UE releases the RRC connection, satellite ephemeris information and cell coverage information.

The aforementioned neighboring cells include TN cells and/or NTN cells. The network side determines the blacklist information and/or the whitelist information corresponding to cell reselection of the UE based on different azimuths of the serving cell of the UE, which specifically includes: based on different azimuths of the serving cell of the UE, satellite ephemeris information and covered cell information, determining the NTN cells that cover different azimuths of the serving cell of the UE in the next hop, and determining to add the NTN cells to the whitelist information or the blacklist information.

The method for cell reselection on the network side provided by the embodiments of the present disclosure and the method for cell reselection executed by the UE provided by the above embodiments belong to the same inventive concept. Various implementations of the method for cell reselection executed by the UE provided by the above embodiments may be applied to the implementation of the method for cell reselection executed on the network side in the embodiment, and will not be repeated here.

The following presents the detailed implementation of the cell reselection performed on the network side, mainly including the following steps:
1) The network side determines the blacklist information and/or whitelist information that includes azimuth information.

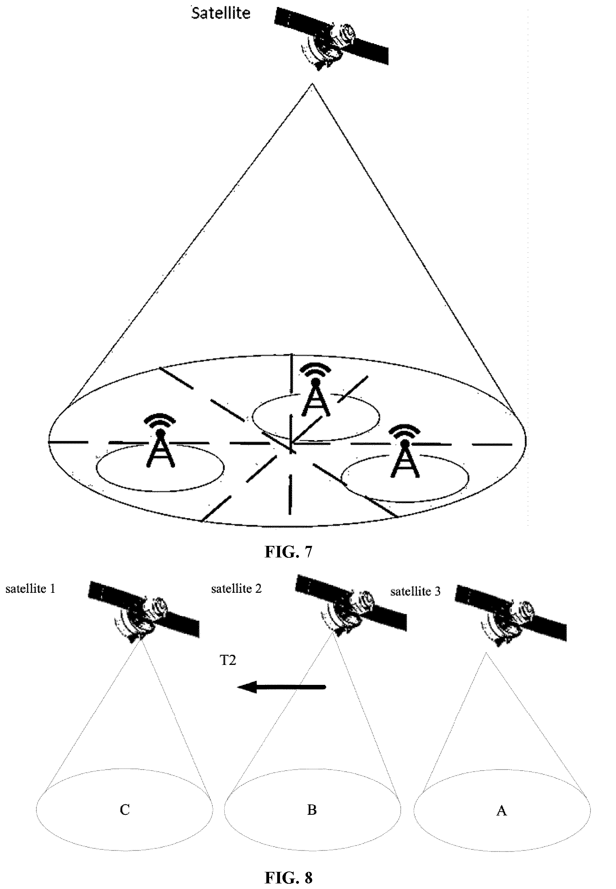

The network side determines the blacklist information and/or whitelist information of different azimuths. The aforementioned azimuth information may be location information of reference points of the corresponding cell, or the relative location information of the corresponding cell with respect to the current serving cell, or the relative azimuth information. As shown in FIG. 5, straight lines in different directions converging to a certain boundary reference point are used to divide the serving cell into Top, Medium, or Bottom; or as shown in FIG. 6, parallel spaced lines in the same direction are used to divide the serving cell into Top, Medium, or Bottom; Or, furthermore, as shown in FIG. 7, a further division is considered at an angle of 45 degrees, and it may be divided into Top-Top (the top part divided by an angle of 45 degrees from the top part), Top-Bottom (the bottom part divided by an angle of 45 degrees from the top part), Bottom-Top (the top part divided by an angle of 45 degrees from the bottom part), Bottom-Bottom (the bottom part divided by an angle of 45 degrees from the bottom part), and so on.

The blacklist/whitelist information may be divided into co-frequency blacklist/whitelist information, different-frequency blacklist/whitelist information, or different-system blacklist/whitelist information. Optionally, the NTN network and the TN network may be regarded as different systems.

For the reselection between NTN-NTN, since NTN satellites are mobile, the azimuth information may only configure cell configurations in the opposite direction of movement of the satellites, that is, may configure the cells covering different azimuths of the serving cell of the UE for the next hop. As shown in FIG. 8, for the coverage area B, which is covered by satellite 2 at a certain moment, when configuring the blacklist/whitelist information for different azimuths of the cells covered by satellite 2, for the blacklist/whitelist information of different azimuths of the next hop with specific configurations, it is possible to only configure the NTN cells in the upper, middle, and lower regions in the opposite direction of the satellite movement covered by the next hop to be added to the blacklist/whitelist cell list, or a more detailed division may be executed.

In the case that after an NTN cell leaves, there are no NTN cells available for reselection and only TN cells may be reselected, the azimuth information may be as shown in FIG. 7. There may also be other division methods, such as dividing into four azimuths or using a grid of nine squares for division, etc.

The network side may transmit the blacklist/whitelist information including azimuth information.

The network side may transmit the blacklist/whitelist information including the azimuth information through system messages, or transmit the blacklist/whitelist information including the azimuth information through the RRC connection release (RRC release) message.

In the case that the network side transmits the blacklist/whitelist information including the azimuth information through the RRC connection release message, the network side simultaneously transmits the invalidation configuration of the blacklist/whitelist including azimuth information transmitted through the RRC connection release message. For the invalidation configuration, for example, a distance threshold is configured. In the case that the change of location of the UE that has received the blacklist/whitelist including the azimuth information transmitted through the RRC connection release message exceeds the distance threshold, the UE may no longer use the blacklist/whitelist information including the azimuth information transmitted through the RRC connection release message.

The RRC Release may indicate only cell information for one hop. The RRC Release message may also indicate next cell information for multiple hops. For the multiple hops, as shown in FIG. 8, in addition to indicating the cells of satellite 2 as candidate neighboring cells for the next reselection, Satellite 1 may also indicate the cells of satellite 3 as candidate neighboring cells for the next-next hop. The multiple hops scheme may be more effective in the scenario of earth moving cells.

The RRC release may also indicate the information related to the reselection of TN cells. For example, it may indicate that measurement of TN cells may be initiated when moving to a range of a certain reference point (judged based on the reference point and radius). Furthermore, it may include information such as frequency point Physical Cell Identifier (PCI) of TN cells; or simply indicate whether to perform the measurement of TN cells.

The information related to the reselection of TN cells mentioned above may be saved by the UE and will not become invalid regardless of whether the UE has reselected to other cells. Because TN cells are fixed. However, in the case that the moving range of The UE exceeds the distance threshold, the information related to the reselection of TN cells may become invalid, because if the movement is out of range, the adjacent TN cells may also have changed.

The RRC release message may carry azimuth information or geographical location information, or it may not carry any azimuth information or geographical location information. That is to say, the network determines the content of carried information according to different ways for transmitting information.

The above is an illustration of a method for cell reselection in the present disclosure. The following is an explanation of the apparatus that execute the above cell reselection.

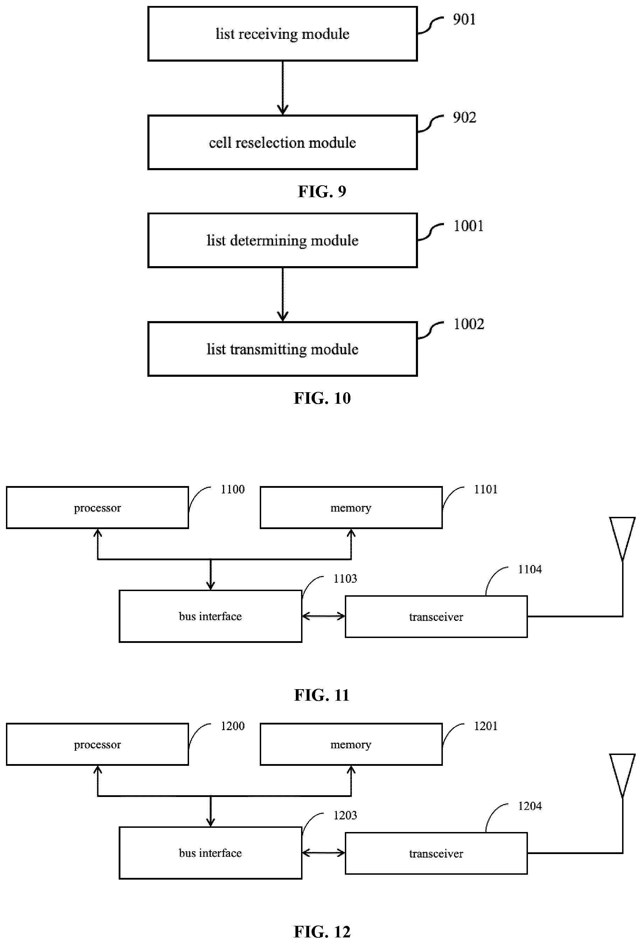

Referring to FIG. 9, embodiments of the present disclosure provides an apparatus for cell reselection, which includes: a list receiving module 901, which is used to receive list information. The list information includes information of one or more neighboring cells; and a cell reselection module 902, which is used to select candidate cells according to the list information.

In a possible implementation, the list information includes blacklist information and/or whitelist information.

In a possible implementation, the list information also includes location information. The location information is used to indicate the locations of the neighboring cells included in the list information.

In a possible implementation, the location information is azimuth indication information. The azimuth indication information is used to indicate azimuths of the neighboring cells included in the list information with reference to a serving cell.

In a possible implementation, the list receiving module 901 receiving the list information includes: receiving a first message transmitted the network side, wherein the first message includes the list information.

In a possible implementation, the first message is a broadcast message or a Radio Resource Control (RRC) connection release message.

In a possible implementation, the first message also carries valid indication information. The valid indication information is used to indicate the validity of the list information.

In a possible implementation, the valid indication information is a distance threshold, and the cell reselection module 902 is also used to:
Obtain a moving distance of the UE;
In the case that the moving distance of the UE exceeds the distance threshold, determine that the list information is invalid.

Referring to FIG. 10, Embodiments of the present disclosure also provides an apparatus for cell reselection. The device includes: a list determining module 1001, which is used to determine list information. The list information includes information of one or more neighboring cells; and a list transmitting module 1002, which is used to transmit the list information to a UE for enabling the UE to select candidate cells according to the list information.

The list information includes blacklist and/or whitelist information.

In a possible implementation, the list information also includes location information. The location information is used to indicate locations of the neighboring cells included in the list information.

In a possible implementation, the location information is azimuth indication information. The azimuth indication information is used to indicate azimuths of the neighboring cells included in the list information with reference to a serving cell.

In a possible implementation, the list transmitting module 1002 transmitting the list information to the UE includes: transmitting the list information to the UE through a first message.

In a possible implementation, the first message is a broadcast message or a Radio Resource Control connection release message.

In a possible implementation, the first message also carries valid indication information. The valid indication information is used to indicate validity of the list information.

In a possible implementation, the valid indication information is a distance threshold.

The apparatus for cell reselection provided in embodiments of the present disclosure and the method for cell reselection provided in the above embodiments belong to the same inventive concept. Various implementations of the method for cell reselection provided in the above embodiments may be applied to the apparatus for cell reselection in the present embodiments for implementation, and will not be repeated here.

The above describes the apparatus for cell reselection in the embodiments of the present disclosure from the perspective of modular functional entities. The following describes the User Equipment (UE) and network-side devices in the embodiments of the present disclosure from the perspective of hardware processing.

Referring to FIG. 11, another embodiment of the user equipment in the embodiments of the present disclosure includes:
At least one processor 1100, a memory 1101 communicatively connected to the at least one processor, a transceiver 1102, and a bus interface 1103.

The processor 1100 is responsible for managing the bus architecture and general processing. The memory 1101 may store the data used by the processor 1100 when performing operations. The transceiver 1102 is used to receive and transmit data under the control of the processor 1100.

The bus architecture may include any number of interconnected buses and bridges, specifically linking together various circuits represented by one or more processors represented by the processor 1100 and the memory represented by the memory 1101. The bus architecture may also link together various other circuits such as peripheral devices, voltage regulators, and power management circuits, which are well known in the art, and thus will not be further described herein. The bus interface provides an interface. The processor 1100 is responsible for managing the bus architecture and general processing, and the memory 1101 may store the data used by the processor 1100 when performing operations.

The processes disclosed in the embodiments of the present disclosure may be applied to the processor 1100 or implemented by the processor 1100. During the implementation process, each step of the signal processing process may be completed by the integrated logic circuit in hardware in the processor 1100 or by instructions in the form of software. The processor 1100 may be a general-purpose processor, a digital signal processor, an application-specific integrated circuit, a field-programmable gate array, or other programmable logic devices, discrete gate or transistor logic devices, discrete hardware components, and may implement or execute the various methods, steps, and logic block diagrams disclosed in the embodiments of the present disclosure. A general-purpose processor may be a microprocessor or any conventional processor, etc. The steps of the methods disclosed in combination with the embodiments of the present disclosure may be directly embodied as being completed by the execution of the hardware processor or completed by the combination of hardware and software modules in the processor. Software modules may be located in mature storage media in the art, such as random access memory, flash memory, read-only memory, programmable read-only memory, electrically erasable programmable read-only memory, registers, etc. The storage medium is located in the memory 1101, and the processor 1100 reads the information in the memory 1101 and combines its hardware to complete the steps of the signal processing process.

Specifically, the above-mentioned memory stores instructions that may be executed by the at least one processor, and when the instructions are executed by the at least one processor, it may enable the at least one processor to execute the following operations: receiving list information, wherein the list information includes information of one or more neighboring cells; selecting candidate cells according to the list information.

In a possible implementation, the list information includes blacklist information and/or whitelist information.

In a possible implementation, the list information also includes location information, and the location information is used to indicate the locations of the neighboring cells included in the list information.

In a possible implementation, the location information is azimuth indication information, and the azimuth indication information is used to indicate azimuths of the neighboring cells included in the list information with reference to a serving cell.

In a possible implementation, the processor receiving the list information includes: receiving a first message transmitted from the network side, wherein the first message includes the list information.

In a possible implementation, the first message is a broadcast message or a Radio Resource Control connection release message.

In a possible implementation, the first message also carries valid indication information, and the valid indication information is used to indicate the validity of the list information.

In a possible implementation, the valid indication information is a distance threshold, and the processor is also used to: obtain a moving distance of the UE; and in the case that the moving distance of the UE exceeds the distance threshold, determine that the list information is invalid.

Referring to FIG. 12, another embodiment of the network-side device in the embodiments of the present disclosure includes: at least one processor 1200, a memory 1201 communicatively connected to the at least one processor, a transceiver 1202, and a bus interface 1203.

The processor 1200 is responsible for managing the bus architecture and general processing. The memory 1201 may store the data used by the processor 1200 when performing operations. The transceiver 1202 is used to receive and send data under the control of the processor 1200.

The bus architecture may include any number of interconnected buses and bridges, specifically linking together various circuits represented by one or more processors represented by the processor 1200 and the memory represented by the memory 1201. The bus architecture may also link together various other circuits such as peripheral devices, voltage regulators, and power management circuits, which are well known in the art, and thus will not be further described herein. The bus interface provides an interface. The processor 1200 is responsible for managing the bus architecture and general processing, and the memory 1201 may store the data used by the processor 1200 when performing operations.

The processes disclosed in the embodiments of the present disclosure may be applied to the processor 1200 or implemented by the processor 1200. During the implementation process, each step of the signal processing process may be completed by the integrated logic circuit in hardware in the processor 1200 or by instructions in the form of software. The processor 1200 may be a general-purpose processor, a digital signal processor, an application-specific integrated circuit, a field-programmable gate array, or other programmable logic devices, discrete gate or transistor logic devices, discrete hardware components, and may implement or execute the various methods, steps, and logic block diagrams disclosed in the embodiments of the present disclosure. A general-purpose processor may be a microprocessor or any conventional processor, etc. The steps of the methods disclosed in combination with the embodiments of the present disclosure may be directly embodied as being completed by the execution of the hardware processor or completed by the combination of hardware and software modules in the processor. Software modules may be located in mature storage media in the art, such as random access memory, flash memory, read-only memory, programmable read-only memory, electrically erasable programmable read-only memory, registers, etc. The storage medium is located in the memory 1201, and the processor 1200 reads the information in the memory 1201 and combines its hardware to complete the steps of the signal processing process.

Specifically, the processor 1200 is used to read the program in the memory 1201 and execute the following operations: determining list information, wherein the list information includes information of one or more neighboring cells; transmit the list information to the UE for enabling the UE to select candidate cells according to the list information.

In a possible implementation, the list information includes blacklist and/or whitelist information.

In a possible implementation, the list information also includes location information, and the location information is used to indicate the locations of the neighboring cells included in the list information.

In a possible implementation, the location information is azimuth indication information, and the azimuth indication information is used to indicate azimuths of the neighboring cells included in the list information with reference to a serving cell.

In a possible implementation, transmitting the list information to the UE includes: transmitting the list information to the UE through a first message.

In a possible implementation, the first message is a broadcast message or a Radio Resource Control connection release message.

In a possible implementation, the first message also carries valid indication information, and the valid indication information is used to indicate the validity of the list information.

In a possible implementation, the valid indication information is a distance threshold.

The embodiments of the present disclosure also provide a computer-readable storage medium that includes instructions. When the instructions are run on a computer, it may enable the computer to execute the method for cell reselection on the UE side or the method for cell reselection on the network side provided in the above embodiments.

Those skilled in the related art may clearly understand that, for the convenience and simplicity of description, the specific working processes of the devices and modules described above may refer to the corresponding processes in the foregoing method embodiments, and will not be repeated here.

In the several embodiments provided in the present disclosure, it should be understood that the disclosed systems, devices, and methods may be implemented in other ways. For example, the device embodiments described above are merely illustrative. For example, the division of the modules is only a logical function division, and there may be other division ways in actual implementation. For example, multiple modules or components may be combined or integrated into another system, or some features may be ignored or not executed. Another point is that the coupling, direct coupling, or communication connection shown or discussed between them may be an indirect coupling or communication connection through some interfaces, devices, or modules, and may be in the form of electrical, mechanical, or other forms.

The modules described as separate components may or may not be physically separated, and the components shown as modules may or may not be physical modules, that is, they may be located in one place or distributed to multiple network modules. Some or all of the modules may be selected according to actual needs to achieve the purpose of the solution in this embodiment

In addition, each functional module in the various embodiments of the present disclosure may be integrated into one processing module, or each module may exist physically separately, or two or more modules may be integrated into one module. The above integrated modules may be implemented either in the form of hardware or in the form of software functional modules. When the integrated modules are implemented in the form of software functional modules and sold or used as independent products, they may be stored in a computer-readable storage medium.

In the above embodiments, it may be implemented entirely or partially by software, hardware, firmware, or any combination thereof. When implemented using software, it may be implemented entirely or partially in the form of a computer program product.

The computer program product includes one or more computer instructions. When the computer program instructions are loaded and executed on a computer, the processes or functions described in the embodiments of the present disclosure are generated entirely or partially. The computer may be a general-purpose computer, a special-purpose computer, a computer network, or other programmable devices. The computer instructions may be stored in a computer-readable storage medium or transmitted from one computer-readable storage medium to another. For example, the computer instructions may be transmitted from one website site, computer, server, or data center to another website site, computer, server, or data center via wired (such as coaxial cable, optical fiber, Digital Subscriber Line (DSL)) or wireless (such as infrared, wireless, microwave, etc.) means. The computer-readable storage medium may be any available medium that a computer may store or a data storage device such as a server or data center that integrates one or more available media. The available media may be magnetic media (such as floppy disks, hard disks, magnetic tapes), optical media (such as DVDs), or semiconductor media (such as solid state disks (SSD)), etc.

The technical solutions provided in the present disclosure have been introduced in detail above. Specific examples have been applied in the present disclosure to illustrate the principles and implementations of the present disclosure. The descriptions of the above embodiments are only used to help understand the methods and core ideas of the present disclosure. Meanwhile, for ordinary technicians in the relevant field, there will be changes in specific implementations and application scopes based on the ideas of the present disclosure. In conclusion, the content of this specification should not be understood as a limitation to the present disclosure.

Those skilled in the related field should understand that the embodiments of the present disclosure may be provided as methods, systems, or computer program products. Therefore, the present disclosure may adopt the form of a completely hardware embodiment, a completely software embodiment, or an embodiment combining software and hardware aspects. Moreover, the present disclosure may adopt the form of a computer program product implemented on one or more computer-usable storage media (including but not limited to disk storage, CD-ROM, optical storage, etc.) that contain computer-usable program code.

The present disclosure is described with reference to the flowcharts and/or block diagrams of the methods, devices (systems), and computer program products according to the present disclosure. It should be understood that each process and/or block in the flowcharts and/or block diagrams may be implemented by computer program instructions, as well as the combination of the processes and/or blocks in the flowcharts and/or block diagrams. These computer program instructions may be provided to the processors of general-purpose computers, special-purpose computers, embedded processors, or other programmable data processing devices to generate a machine, so that the instructions executed by the processors of the computer or other programmable data processing devices generate a device for implementing the functions specified in one or more processes of the flowchart and/or one or more blocks of the block diagram.

The computer program instructions may also be stored in a computer-readable memory that may guide the computer or other programmable data processing devices to work in a specific manner, so that the instructions stored in the computer-readable memory generate a manufactured product including an instruction device that implements the functions specified in one or more processes of the flowchart and/or one or more blocks of the block diagram.

The computer program instructions may also be loaded onto a computer or other programmable data processing devices, so that a series of operation steps are executed on the computer or other programmable devices to generate a computer-implemented process, and thus the instructions executed on the computer or other programmable devices provide steps for implementing the functions specified in one or more processes of the flowchart and/or one or more blocks of the block diagram.

Apparently, those skilled in the related field may make various modifications and variations to the present disclosure without departing from the spirit and scope of the present disclosure. Thus, if these modifications and variations of the present disclosure fall within the scope of the claims of the present disclosure and their equivalent technologies, the present disclosure also intends to include the modifications and variations.

## Claims

1. A method for cell reselection, applied to a user equipment (UE), **characterized by** comprising:
receiving list information, wherein the list information comprises information of one or more neighboring cells;
selecting candidate cells according to the list information.

2. the method according to claim 1, **characterized in that** the list information comprises blacklist information and/or whitelist information.

3. the method according to claim 1 or 2, **characterized in that** the list information further comprises location information, wherein the location information is used to indicate locations of the neighboring cells comprised in the list information.

4. the method according to claim 3, **characterized in that** the location information is azimuth indication information, wherein the azimuth indication information is used to indicate azimuth of the neighboring cells comprised in the list information with a serving cell as a reference.

5. the method according to any one of claims 1-4, **characterized in that** receiving the list information comprises:
receiving first information transmitted from a network side, wherein the first information comprises the list information.

6. the method according to claim 5, **characterized in that** the first information is a broadcast message or a radio resource control connection release message.

7. the method according to claim 6, **characterized in that** the first information further carries valid indication information, the valid indication information is used to indicate validity of the list information.

8. the method according to claim 7, **characterized in that** the valid indication information is a distance threshold, and the method further comprises:
obtaining a moving distance of the UE;
in the case that the moving distance of the UE exceeds the distance threshold, determining the list information being invalid.

9. A method for cell reselection, applied to a network side device, **characterized by** comprising:
determining list information, wherein the list information comprises information of one or more neighboring cells;
transmitting the list information to a UE for enabling the UE to select candidate cells according to the list information.

10. the method according to claim 9, **characterized in that** the list information comprises blacklist information and/or whitelist information.

11. the method according to claim 9 or 10, **characterized in that** the list information further comprises location information, the location information is used to indicate locations of the neighboring cells comprised in the list information.

12. the method according to claim 11, **characterized in that** the location information is azimuth indication information, wherein the azimuth indication information is used to indicate azimuth of the neighboring cells comprised in the list information with a serving cell as a reference.

13. the method according to any one of claims 9-12, **characterized in that** transmitting the list information to the UE comprises:
transmitting the list information to the UE through first information.

14. the method according to claim 13, **characterized in that** the first information is a broadcast message or a radio resource control connection release message.

15. the method according to claim 14, **characterized in that** the first information further carries valid indication information, the valid indication information is used to indicate validity of the list information.

16. the method according to claim 15, **characterized in that** the valid indication information is a distance threshold.

17. An apparatus for cell reselection, **characterized by** comprising:
a list reception module, configured to receive list information, wherein the list information comprises information of one or more neighboring cells;
a cell reselection module, configured to select candidate cells according to the list information.

18. the apparatus according to claim 17, **characterized in that** the list information comprises blacklist information and/or whitelist information.

19. the apparatus according to claim 17 or 18, **characterized in that** the list information further comprises location information, wherein the location information is used to indicate locations of the neighboring cells comprised in the list information.

20. the apparatus according to claim 19, **characterized in that** the location information is azimuth indication information, wherein the azimuth indication information is used to indicate azimuth of the neighboring cells comprised in the list information with a serving cell as a reference.

21. the apparatus according to any one of claims 1-4, **characterized in that** receiving the list information by the list reception module comprises:
receiving first information transmitted from a network side, wherein the first information comprises the list information.

22. the apparatus according to claim 21, **characterized in that** the first information is a broadcast message or a radio resource control connection release message.

23. the apparatus according to claim 22, **characterized in that** the first information further carries valid indication information, the valid indication information is used to indicate validity of the list information.

24. the apparatus according to claim 23, **characterized in that** the valid indication information is a distance threshold, and the cell reselection module is further configured to:
obtain a moving distance of the UE;
in the case that the moving distance of the UE exceeds the distance threshold, determine the list information being invalid.

25. An apparatus for cell reselection, **characterized by** comprising:
a list determining module, configured to determine list information, wherein the list information comprises information of one or more neighboring cells;
a list transmitting module, configured to transmit the list information to a user equipment (UE) for enabling the UE to select candidate cells according to the list information.

26. the apparatus according to claim 25, **characterized in that** the list information comprises blacklist information and/or whitelist information.

27. the apparatus according to claim 25 or 26, **characterized in that** the list information further comprises location information, the location information is used to indicate locations of the neighboring cells comprised in the list information.

28. the apparatus according to claim 27, **characterized in that** the location information is azimuth indication information, wherein the azimuth indication information is used to indicate azimuth of the neighboring cells comprised in the list information with a serving cell as a reference.

29. the apparatus according to any one of claims 25-28, **characterized in that** transmitting the list information to the UE by the list transmitting module comprises:
transmitting the list information to the UE through first information.

30. the apparatus according to claim 29, **characterized in that** the first information is a broadcast message or a radio resource control connection release message.

31. the apparatus according to claim 30, **characterized in that** the first information further carries valid indication information, the valid indication information is used to indicate validity of the list information.

32. the apparatus according to claim 31, **characterized in that** the valid indication information is a distance threshold.

33. a user equipment (UE), **characterized by** comprising at least one processor; and a memory communicatively connected with the at least one processor; wherein the memory stores instructions, and the instructions are executed by the at least one processor, which enables the at least one processor to execute a method according to any one of claims 1-8.

34. a network side device, **characterized by** comprising at least one processor; and a memory communicatively connected with the at lest oen processor; wherein the memory stores instructions, and the instructions are executed by the at least one processor, which enables the at least one processor to execute a method according to any one of claims 9-16.

35. a computer program medium, **characterized in that** the computer program medium stores computer program, and the computer program is executed by a processor to implement steps of a method according to any one of claims 1-8, or implement steps of a method according to any one of claims 9-16.
